# EUROPÄISCHE PATENTANMELDUNG

(11) **EP 2 251 710 A2**
(43) Veröffentlichungstag der Anmeldung: **17.11.2010**
(21) Anmeldenummer: 10158926.5
(22) Anmeldetag: 01.04.2010
(51) Int. Cl.: G01S 7/524, G01S 7/527, G01S 15/10, G01S 15/87, G01S 15/93

(54) **Ultraschallobjekterfassungssystem und Verfahren zur Erfassung von Objekten mit Hilfe von Ultraschall**

(30) Priorität: 06.05.2009 DE 102009002870
(71) Anmelder: Robert Bosch GmbH, 70469 Stuttgart (DE)
(72) Erfinder: Karl, Matthias, 76275 Ettlingen (DE)

(57) **Zusammenfassung**

Es wird ein Ultraschallobjekterfassungssystem und ein Verfahren zur Erfassung von Objekten mit Hilfe zumindest eines Sensors (Sal..Sar) eines Ultraschallobjekterfassungssystems angegeben. Dabei wird zuerst ein Ultraschallimpuls (P) mit einer durch Impulsdauer (Ti) und Impulsstärke (Ai) definierten Impulsenergie ausgesendet. Ein Echo (E1..EM) des Ultraschallimpulses (P) wird empfangen, verarbeitet und daraufhin überprüft ob kritische Objekte in einem Teilbereich (B1..B3, B1'..B3') innerhalb des vom zumindest einen Sensor (Sal..Sar) maximal erfassbaren Bereichs (Bmax_Sal, Bmax_Sar&Smr) vorhanden sind. Abhängig vom Ergebnis der Überprüfung wird ein weiterer Ultraschallimpuls (P) mit derselben Impulsenergie ausgesendet, insbesondere zur weiteren Überwachung dieses Teilbereichs (B1..B3, B1'..B3'), und/oder ein Ultraschallimpuls (P) mit einer anderen Impulsenergie ausgesendet, insbesondere zur Überwachung eines anderen Teilbereichs (B1..B3, B1'..B3').

## Beschreibung

Die Erfindung betrifft ein Verfahren zur Erfassung von Objekten mit Hilfe zumindest eines Sensors eines Ultraschallobjekterfassungssystems, wobei die Schritte: Aussenden eines Ultraschallimpulses mit einer durch Impulsdauer und Impulsstärke definierten Impulsenergie, Empfangen eines Echos des Ultraschallimpulses, Verarbeiten des Echos und Überprüfen ob kritische Objekte innerhalb des vom zumindest einen Sensor maximal erfassbaren Bereichs vorhanden sind, ausgeführt werden, bevorzugt um den Fahrer eines Fahrzeuges über die Situation der das Fahrzeug umgebenden Objekte zu informieren und/oder um beim Lenken bzw. manövrieren des Fahrzeuges durch Ansteuerung der Lenkvorrichtungen behilflich zu sein und/oder um das Fahrzeug durch Betätigung der Bremsvorrichtung oder der Beschleunigungsvorrichtung, wie z.B. dem Gas, in seiner Fahrweise zu beeinflussen und/oder um Vorrichtungen zur Vermeidung von Unfällen und/oder zur Senkung der Unfallschwere , wie z.B. Airbags, Gurtstraffer, Fensterheber, Dachantriebe und/oder höhenverstellbaren Motorhauben, in ihren Eigenschaften zu beeinflussen, wie z.B. zu parametrieren, und/oder zu betätigen. Weiterhin betrifft die Erfindung ein Ultraschallobjekterfassungssystem zur Durchführung des erwähnten Verfahrens.

### Stand der Technik

Ultraschallobjekterfassungssysteme sind in der Lage, Objekte in einem Erfassungsbereich durch Aussenden eines Ultraschallimpulses und Auswertung des auf den Impuls folgenden Echos zu detektieren. Die aus dem Echo gewonnene Information reicht von der bloßen Angabe ob ein Objekt vorhanden ist oder nicht, über den Abstand zu einem Objekt bis zu komplexen Abbildern der Umwelt, in dem Objekte im Erfassungsbereich hinsichtlich ihres Abstandes, ihrer Geschwindigkeit und deren Richtung, hinsichtlich ihrer Oberfläche und/oder hinsichtlich ihrer Größen unterschieden werden können. Ähnlich wie wir ein visuelles Abbild unserer Umwelt erhalten, kann ein komplexes Ultraschallobjekterfassungssystem ein "Schallabbild" seiner Umwelt, ein Objektszenenbild, erzeugen.

Ultraschallobjekterfassungssysteme werden unter anderem als Assistenzsysteme für den Lenker oder Führer eines Fahrzeuges eingesetzt. Aber auch die völlig autonome Kontrolle eines Fahrzeuges mit solchen Erfassungssystemen ist möglich. Im Folgenden wird auf Landfahrzeuge Bezug genommen. Die Erfindung ist aber keineswegs auf Landfahrzeuge beschränkt. Vielmehr kann sie beispielsweise auch auf Schiffen und für Flugzeuge - dort zur Kontrolle am Boden - eingesetzt werden. Diese Systeme erfassen Objekte zumeist im Bereich vor dem Fahrzeug, aber auch nach hinten oder auf die Seite gerichtete Systeme werden eingesetzt. Bei Kraftfahrzeugen reicht das Einsatzgebiet von der Einparkhilfe bis zur Überwachung des vor dem Kraftfahrzeug liegenden Bereiches bei vergleichsweise schneller Fahrt.

Beispielsweise offenbart die DE 42 08 595 A1 dazu eine Einrichtung zur Abstandsmessung mit Ultraschall, bei der ein Sender ein impulsförmiges Signal abgibt, das reflektiert wird und in einem Empfänger in ein elektrisches Echosignal gewandelt wird. Durch Messung der Laufzeit zwischen dem ausgesandten und dem empfangenen Signal wird der Abstand zwischen Sender und Empfänger bestimmt. Ungenauigkeiten bei der Auswertung des Echosignals werden durch Veränderung einer Schaltschwelle beziehungsweise durch Veränderung der Verstärkung des Echosignals oder durch Beeinflussung des abgestrahlten Signals in Abhängigkeit vom zuvor empfangenen Echosignal vermieden.

Die DE 196 45 339 A1 offenbart weiterhin ein Ultraschall-Parkhilfesystem, welches ein Warnsignal abgibt, wenn ein innerhalb eines Hörfensters liegendes Echosignal einen bestimmten Schwellwert überschreitet. Die Empfindlichkeit, das Hörfenster, oder auch der Sendeverlauf wird dabei in Abhängigkeit von sich ändernden dynamischen Daten des Fahrzeugs beziehungsweise der Fahrbahn angepasst.

### Offenbarung der Erfindung

Es wird nun ein Verfahren zur Erfassung von Objekten mit Hilfe zumindest eines Sensors eines Ultraschallobjekterfassungssystems vorgesehen, umfassend die Schritte:
a) Aussenden von zumindest einem Ultraschallimpuls mit einer durch Impulsdauer und Impulsstärke definierten Impulsenergie;
b) Empfangen von zumindest einem Echo des zumindest einen Ultraschallimpulses;
c) Verarbeiten des zumindest einen Echos und Überprüfen ob kritische Objekte in einem Teilbereich innerhalb des vom zumindest einen Sensor maximal erfassbaren Bereichs vorhanden sind; und
d) Wiederholen der Schritte a) bis d) mit dieser Impulsenergie, insbesondere zur erneuten Überprüfung dieses Teilbereichs, und/oder Wiederholen der Schritte a) bis d) mit einer anderen Impulsenergie, insbesondere zur Überprüfung eines anderen Teilbereichs, abhängig vom Ergebnis der Prüfung in Schritt c).

Es wird auch ein Ultraschallobjekterfassungssystem vorgesehen, umfassend:
- zumindest einen Sensor zum Aussenden eines Ultraschallimpulses mit einer durch Impulsdauer und Impulsstärke definierten Impulsenergie und zum Empfangen eines Echos des Ultraschallimpulses;
- eine zentrale Verarbeitungseinheit zum Verarbeiten des Echos und Überprüfen ob kritische Objekte in einem Teilbereich innerhalb des vom zumindest einen Sensor maximal erfassbaren Bereichs vorhanden sind, und zum Wiederholen des Aussendens eines Ultraschallimpulses mit dieser Impulsenergie, insbesondere zur erneuten Überprüfung dieses Teilbereichs, und zum Aussenden eines Ultraschallimpulses mit einer anderen Impulsenergie, insbesondere zur Überprüfung eines anderen Teilbereichs, abhängig vom Ergebnis der Überprüfung.

Erfindungsgemäß wird die Art der Erfassung an die jeweilige Objektszenerie, also Position, Anzahl und Größe der Objekte angepasst. Dazu werden Ultraschallimpulse unterschiedlicher Energie verwendet, um jeweils ein optimales Empfangssignal zu erhalten. Die Echostärke hängt dabei einerseits von der Sendeimpulsstärke und andererseits von dem Reflexionsvermögen sowie der räumlichen Ausdehnung des Objektes ab. So wird bei räumlich verteilten Objekten die zeitlich konzentrierte Impulsenergie zu Lasten der Impulsstärke zeitlich gestreckt.

In einem Teilbereich wird die Suche nach Objekten nun so lange fortgesetzt, solange ein kritisches Objekt erkannt wird. Ist kein kritisches Objekt feststellbar, so wechselt das Objekterfassungssystem (zusätzlich) in einen anderen Teilbereich. Das erfindungsgemäße Verfahren teilt den Erfassungsbereich auf vorteilhafte Weise hierarchisch auf. Zuerst wird die Suche auf einen bestimmten Bereich konzentriert, in der Regel auf einen Bereich, auf den das primäre Interesse gerichtet ist. Bei langsamer Fahrt eines Fahrzeuges wird dies beispielsweise ein nahe vor dem Fahrzeug liegender Bereich sein. Wenn dort keine Gefährdung festgestellt werden kann, wird die Suche auf andere Teilbereiche ausgedehnt oder verlegt. Die Ressourcen des Ultraschallobjekterfassungssystems werden auf diese Weise optimal eingesetzt, das heißt die Verfahren und Parameter zur Erfassung eines Objektes werden optimal auf den Erfassungsbereich eingestellt. Sollen beispielsweise Objekte in nächster Nähe detektiert werden, so wird vorteilhaft die Sendeimpulsstärke gegenüber der maximal möglichen Sendeimpulsstärke abgesenkt und/oder die Sendeimpulsdauer verringert. Insbesondere durch Absenken der Sendeimpulsstärke wird das Nachschwingen des Schallgebers verringert, wodurch Sensoren, deren Membran sowohl zum Senden aus auch zum Empfangen verwendet werden, rascher empfangsbereit sind.

"Kritische Objekte" sind im Rahmen der Erfindung Objekte, die prinzipiell eine Gefährdung des Fahrzeugs oder dessen Insassen darstellen, etwa große Objekte in Fahrtrichtung, insbesondere wenn sich die Echolaufzeit von aufeinander folgenden Messungen verkürzt oder erheblich verkürzt. Vom Ultraschallobjekterfassungssystem werden natürlich auch unkritische Objekte erfasst. Dies sind Objekte, die entweder abseits des Fahrzeugs liegen oder voraussichtlich liegen werden, oder aber auch Objekte, die aufgrund ihrer geringen Größe auch bei Kontakt mit dem Fahrzeug keine Gefahr darstellen.

Die Unterscheidung nach kritischen und unkritischen Objekten ist häufig nur schwierig möglich beziehungsweise mit Unsicherheiten verbunden. Wenn die Entscheidung eher vage ist, dann wird neben der fortlaufenden Überprüfung in dem interessierenden Teilbereich eher eine geringfügige *Ausdehnung* der Suche auf andere Teilbereiche von Belang sein, wohingegen bei einer klaren Aussage, dass keine kritischen Objekte feststellbar sind, die Suche eher auf andere Teilbereiche *verlegt* werden wird. Aber auch wenn erwartet wird, dass in mehreren Teilbereichen plötzlich seitlich herannahende Objekte auftauchen können, kann eine parallele Überwachung mehrerer Teilbereiche sinnvoll sein und mit dem nachfolgend näher erläuterten erfindungsgemäßen Verfahren und System besonders rasch und mit hoher Zuverlässigkeit erreicht werden.

"Sensoren" können im Rahmen der Erfindung sowohl ein Ultraschallsignal aussenden als auch ein Echo empfangen. Diese Bauart ist zwar vorteilhaft aber keineswegs zwingend. Gleichermaßen sind auch baulich getrennte Ultraschallsender und -empfänger möglich. Bei baulich getrennten Einheiten ist der Begriff "Sensor" daher gedanklich durch "Ultraschallsender" zu ersetzen, wenn der Sensor einen Ultraschallimpuls abgibt, und durch "Ultraschallempfänger", wenn der Sensor ein Echo empfängt.

Das erfindungsgemäße Verfahren beziehungsweise das erfindungsgemäße Ultraschallobjekterfassungssystem eignet sich besonders, um den Fahrer eines Fahrzeuges über die räumliche Anordnung und optional der Bewegung der das Fahrzeug umgebenden Objekte zu informieren und/oder um beim Lenken bzw. manövrieren des Fahrzeuges durch Ansteuerung der Lenkvorrichtungen behilflich zu sein und/oder um das Fahrzeug durch Betätigung der Bremsvorrichtung oder der Beschleunigungsvorrichtung, wie z.B. dem Gas, in seiner Fahrweise zu beeinflussen und/oder um Vorrichtungen zur Vermeidung von Unfällen und/oder zur Senkung der Unfallschwere , wie z.B. Airbags, Gurtstraffer, Fensterheber, Dachantriebe und/oder höhenverstellbaren Motorhauben, in ihren Eigenschaften zu beeinflussen, wie z.B. zu parametrieren, und/oder zu betätigen.

Vorteilhafte Ausgestaltungen und Weiterbildungen der Erfindung ergeben sich aus den Unteransprüchen sowie aus der Beschreibung in Zusammenschau mit den Figuren der Zeichnung.

Günstig ist es, wenn das Verfahren zur Erfassung von Objekten mit Hilfe zumindest eines Sensors eines Ultraschallobjekterfassungssystems alternativ folgende Schritte umfasst:
a) Aussenden von Ultraschallimpulsen mit einer durch Impulsdauer und Impulsstärke definierten Impulsenergie;
b) Empfangen von Echos des Ultraschallimpulses;
c) Verarbeiten von Echos und Überprüfen ob kritische Objekte in einem Teilbereich innerhalb des vom zumindest einen Sensor maximal erfassbaren Bereichs vorhanden sind;
   und
d) Wiederholen der Schritte a) bis d) mit dieser Impulsenergie zur erneuten Überprüfung von bevorzugt diesem Teilbereich oder Wiederholen der Schritte a) bis d) mit einer anderen Impulsenergie zur bevorzugten Überprüfung eines anderen Teilbereichs optional zusätzlich zur laufenden Überprüfung mit der bereits verwendeten Impulsenergie oder alleine.

Günstig ist es auch, wenn das Ultraschallobjekterfassungssystem alternativ umfasst:
- zumindest einen Sensor zum Aussenden eines Ultraschallimpulses mit einer durch Impulsdauer und Impulsstärke definierten Impulsenergie und zum Empfangen eines Echos des Ultraschallimpulses;
- eine zentrale Verarbeitungseinheit zum Verarbeiten des Echos und Überprüfen ob kritische Objekte in einem Teilbereich innerhalb des vom zumindest einen Sensor maximal erfassbaren Bereichs vorhanden sind; und zum Wiederholen des Aussendens von zumindest eines Ultraschallimpulses mit dieser Impulsenergie zur erneuten Überprüfung von bevorzugt diesem Teilbereich und zum Aussenden eines Ultraschallimpulses mit einer anderen Impulsenergie zur bevorzugten Überprüfung eines anderen Teilbereichs zusätzlich zur laufenden Überprüfung mit der bereits verwendeten Impulsenergie oder alleine.

Vorteilhaft ist es, wenn die Schritte a) bis d) mit einer höheren Impulsenergie zur Überprüfung eines entfernteren Teilbereichs und/oder mit einer geringeren Impulsenergie zur Überprüfung eines näher liegenden Teilbereichs wiederholt werden. Besonders vorteilhaft ist es dabei, wenn die Schritte a) bis d) mit einer höheren Impulsenergie zur Überprüfung eines entfernteren Teilbereichs wiederholt werden. wenn das Ergebnis der Überprüfung in Schritt c) negativ ist, also im gegenwärtig geprüften Teilbereich keine kritischen Objekte feststellbar sind. Bei dieser Variante der Erfindung wird mit der Objekterfassung in der Nähe der Sensoren oder des Fahrzeugs begonnen und wird - wenn im untersuchten Bereich keine Objekte feststellbar sind - auf einen entfernteren Bereich ausgedehnt oder verlagert. Damit wird sichergestellt, dass Objekte, die sich in der unmittelbaren Nähe des Fahrzeugs befinden und potentiell eine höhere Gefahr darstellen als weiter entfernte Objekte, zuerst erkannt werden.

Günstig ist es, wenn die Impulsenergie durch Variation der Impulsdauer variiert wird und sich die Impulsdauern in zwei verschiedenen Teilbereichen um mindestens den Faktor 2 unterscheiden. Damit die Impulse beim Empfangen des Echos korrekt einem untersuchten Bereich zugeordnet werden können, werden hier Impulse unterschiedlicher Impulsdauer eingesetzt. Für eine möglichst zweifelsfreie Zuordnung unterscheiden sich die Impulsdauern dabei mindestens um den Faktor 2.

Günstig ist es auch, wenn die Impulsenergie durch Variation der Impulsstärke variiert wird und sich die Impulsstärke in zwei verschiedenen Teilbereichen um mindestens den Faktor 2 unterscheiden. Bei dieser Variante wird die Impulsstärke variiert, einerseits um die Impulsstärke dem typischen Objektabstand im untersuchten Bereich anzupassen, andererseits aber auch um die den Impulsen folgenden Echos den unterschiedlichen Teilbereichen zuordnen zu können.

Günstig ist es weiterhin, wenn Impulsdauer und Impulsstärke variiert wird. Bei dieser Ausgestaltung des erfindungsgemäßen Verfahrens werden die Vorteile von Variation der Impulsdauer und Impulsstärke kombiniert.

In einer vorteilhaften Ausgestaltung der Erfindung wird der maximal erfassbare Abstandsbereich in einen ersten Teilbereich von 0 bis 50 cm, einen zweiten Teilbereich von 20 bis 150 cm und in einen dritten Teilbereich von mehr als 100 cm Abstand vor dem zumindest einem Sensor unterteilt und dem ersten Teilbereich eine erste Impulsdauer von 0,01 ms bis 0,2 ms, dem zweiten Teilbereich eine zweite Impulsdauer von 0,2 ms bis 1 ms und dem dritten Teilbereich eine dritte Impulsdauer von 1 ms bis 10 ms zugeordnet. Diese Aufteilung der Teilbereiche sowie Auswahl der Impulsdauern hat sich als besonders tauglich für die Objekterfassung, insbesondere für Kraftfahrzeuge, erwiesen.

Günstig ist es, wenn zumindest ein Teil des Beobachtungsraums der Sensoren keulenartig geformt ist. Da der Raum abseits einer bevorzugten Richtung in der Regel weniger interessant für die Objekterfassung ist, wird bei dieser Variante des erfindungsgemäßen Verfahrens ein keulenartiger Beobachtungsraum vorgesehen. Dies hat sich insbesondere bei der Anwendung für Kraftfahrzeuge als tauglich erwiesen. Dabei können Sensoren, die in der Mitte des Fahrzeugs angeordnet sind und/oder in Bewegungsrichtung ausgerichtet sind, für denselben Teilbereich Ultraschallimpulse höherer Impulsenergie aussenden als andere Sensoren.

Vorteilhaft ist es, wenn die Beobachtungsräume der Sensoren stets in einer Bewegungsrichtung eines Fahrzeuges, auf oder in dem das Ultraschallobjekterfassungssystem montiert ist, ausgerichtet sind. Bei dieser Variante werden Richtungsänderungen des Fahrzeugs berücksichtigt. Bei einem Kraftfahrzeug kann hierfür etwa der Lenkwinkel der Vorderräder gemessen werden, bei einem Schiff beispielsweise die Ruderstellung. Entsprechend der eingeschlagenen Richtung werdend die Sensoren des Ultraschallobjekterfassungssystems so ausgerichtet, dass der interessierende, links oder rechts vor dem Fahrzeug liegende Bereich abgetastet wird. Dabei können Sensoren, die den Bereich rechts vor dem Fahrzeug abtasten, bei einer Linkskurve für denselben Teilbereich Ultraschallimpulse geringerer Impulsenergie aussenden als andere Sensoren und umgekehrt. Für die Bestimmung der Bewegungsrichtung des Fahrzeuges können Daten des Fahrzeuges wie etwa Lenkradwinkel, sowie die Querbeschleunigung, insbesondere unter Berücksichtigung der Momentangeschwindigkeit, herangezogen werden.

Vorteilhaft ist es auch, wenn gleichzeitig zu einer Abfolge erster Ultraschallimpulse, welche eine erste Impulsenergie zur Überprüfung eines ersten Teilbereichs aufweisen, eine Abfolge zweiter Ultraschallimpulse, welche eine zweite Impulsenergie zur Überprüfung eines zweiten Teilbereichs aufweisen, ausgesendet wird. Bei dieser Variante können zwei oder auch mehr Teilbereiche gleichzeitig abgetastet werden. Beispielsweise kann, wenn kritische Objekte in einem Teilbereich vorhanden sind, die Objekterfassung für diesen Teilbereich weitergeführt werden und die Objekterfassung für einen anderen Teilbereich begonnen werden.

Vorteilhaft ist es weiterhin, wenn für zumindest zwei Teilbereiche unterschiedliche Abfolgen von Ultraschallimpulsen vorgesehen sind. Bei dieser Variante der Erfindung kann eine Zuordnung der empfangenen Echos zu den verschiedenen Teilbereichen nicht nur der Impulsdauer und Impulsstärke der ausgesendeten Ultraschallimpulse getroffen werden, sondern auch anhand der Abfolge der Impulse, das heißt anhand eines Codes. Eine Zuordnung der Impulse zu den Teilbereichen ist daher auf besonders einfache Weise möglich.

Bei einer weiteren vorteilhaften Variante der Erfindung wird nach einem ersten Ultraschallimpuls, welcher eine erste Impulsenergie zur Überprüfung eines ersten Teilbereichs aufweist, aber innerhalb einer Echoberuhigungszeit im ersten Teilbereich ein zweiter Ultraschallimpuls mit einer zweiten Impulsenergie zur Überprüfung eines zweiten Teilbereichs ausgesendet. Auf diese Weise kann eine kurze Ersterfassungszeit gewährleistet werden. Wird das Ultraschallobjekterfassungssystem zum Beispiel in Betrieb genommen, so kann es von Vorteil sein, Objekte in zwei oder mehreren Teilbereichen möglichst rasch zu detektieren. Anstelle einer sequentiellen Abtastung der Teilbereiche werden hier mehrere Teilbereiche parallel abgetastet.

Günstig ist es, wenn Ultraschallimpulse von mehreren Punkten gleichzeitig ausgestrahlt werden. Hier geht - wenn das Ultraschallobjekterfassungssystem an einem Fahrzeug montiert ist - eine Schallfront oder Impulsenergiefront vom Fahrzeug aus. Die Laufzeit irgendeines zuerst empfangenen Echos entspricht dabei in erster Näherung dem Objektabstand zur Fahrzeugoberfläche. Die Vorzüge dieses zeitgleichen Sendens machen sich insbesondere bei Fernfeldsendeimpulsen und weniger bei Nahfeldsendeimpulsen bemerkbar.

Günstig ist es weiterhin, wenn nach einer Echoberuhigungszeit nach den besagten Ultraschallimpulsen weitere Ultraschallimpulse von mehreren Punkten gleichzeitig ausgestrahlt werden. Dieses Verfahren wird als "zeitgleicher Doppelschuss" bezeichnet und dient dazu, Echos des ersten Ultraschallimpulses zu verifizieren. Wird beim zweiten Impuls dasselbe oder ein ähnliches Echo empfangen, kann von einer korrekten Objekterfassung ausgegangen werden. Sind die Echos unterschiedlich, so liegt aller Wahrscheinlichkeit eine Störung vor. Ein Doppelschuss ist beispielsweise empfehlenswert, wenn das Echobild Anzeichen von Knackstörern oder anderen Fremdstörer zeigt.

Vorteilhaft ist es, wenn nach einer Echoberuhigungszeit nach den besagten Ultraschallimpulsen ein weiterer Ultraschallimpuls von einem einzigen Punkt ausgestrahlt wird. Bei dieser Variante wird nach einem Ultraschallimpuls von mehreren Punkten, welcher der raschen Aussage ob Objekte im untersuchten Teilbereich vorhanden sind, die Objektsuche gezielt mit einzelnen Ultraschallimpulsen fortgesetzt, die eine genauere Aussage erlauben, wo sich welche Objekte befinden.

Vorteilhaft ist es weiterhin, wenn nach den besagten Ultraschallimpulsen, welche eine erste Impulsenergie zur Überprüfung eines ersten Teilbereichs aufweisen, von den mehreren Punkten Ultraschallimpulse mit einer zweiten Impulsenergie zur Überprüfung eines zweiten Teilbereichs sequentiell, jeweils nach einer Echoberuhigungszeit für den zweiten Teilbereich, ausgesendet werden. Diese Variante der Erfindung vereint die Vorteile der Objekterfassung mit Hilfe einer Impulsfront in einem Bereich und die Vorteile einer exakten Bestimmung eines Objektes in einem anderen Bereich. Während in einem Fernbereich etwa eine exakte Bestimmung der Szenerie erfolgt können in einem Nahbereich gleichzeitig plötzlich auftauchende Objekte detektiert werden.

Besonders vorteilhaft ist es, wenn anstelle der gleichzeitigen Ausstrahlung eines Ultraschallimpulses eine sequentielle Ausstrahlung von Ultraschallimpulsen von den mehreren Punkten innerhalb der zehnfachen Dauer eines Ultraschallimpulses vorgesehen ist. Bei dieser Variante der Erfindung kann von einem "quasi-gleichzeitigen" Ultraschallimpuls gesprochen werden. Dieser hat - so wie der gleichzeitige Impuls - den Vorteil, dass sich eine Impulsfront vom Fahrzeug wegbewegt, allerdings ist der Leistungsbedarf hier geringer, als wenn alle Sensoren tatsächlich gleichzeitig einen Impuls ausstrahlen.

Vorteilhaft ist es schließlich auch, wenn für die Erfassung der Änderung einer Objektdistanz ein Dauerton ausgesendet und eine Phasenänderung des reflektierten Dauertonsignales ausgewertet wird. Bei sehr kurzen Objektdistanzen wird auch die Laufzeit des Echos sehr gering, zum Teil so gering, dass eine korrekte Angabe der Distanz nicht oder nur sehr schwierig möglich ist. In diesem Fall wird einfach aus der Phasenänderung des reflektierten Schallsignals auf eine Distanzänderung rückgerechnet. Auf diese Weise ist eine sehr genaue Angabe der Distanz möglich. Selbstverständlich kann dieses Verfahren auch auf weiter entfernte Objekte angewandt werden, wenn eine exakte Änderung der Objektdistanz erfasst werden soll.

Die obigen Ausgestaltungen und Weiterbildungen der Erfindung lassen sich auf beliebige Art und Weise kombinieren. An dieser Stelle wird auch angemerkt, dass sich die vorgestellten Varianten der Erfindung sowie Vorteile derselben sowohl auf das Verfahren als auch auf das Ultraschallobjekterfassungssystem an sich beziehen. Die Funktionen des Ultraschallobjekterfassungssystem können sowohl in Hardware als auch in Software oder gemischt realisiert werden. Das Ultraschallobjekterfassungssystem kann auch ganz oder teilweise in die Soft- und/oder Hardware eines anderen Systems integriert sein. Beispielsweise kann das Ultraschallobjekterfassungssystem Teil eines Bordcomputers sein.

Die vorliegende Erfindung wird nachfolgend anhand der in den schematischen Figuren der Zeichnung angegebenen Ausführungsbeispiele näher erläutert. Es zeigen dabei:
Figur 1 eine Draufsicht auf ein symbolisch dargestelltes Fahrzeug mit einem Ultraschallobjekterfassungssystem;
Figur 2 ein beispielhaftes Zeitdiagramm eines Ultraschallechozyklus;
Figur 3 eine nach dem Stand der Technik am meisten gebräuchliche zeitliche Verteilung von Ultraschallimpulsen;
Figur 4 eine nach dem Stand der Technik teilweise übliche zeitliche Verteilung von Ultraschallimpulsen mit Doppelschuss an einem Sensor;
Figur 5 ein erstes erfindungsgemäßes Beispiel einer zeitlichen Verteilung von Ultraschallimpulsen mit einem von allen Sensoren gleichzeitig ausgestrahlten Impuls und anschließendem Doppelschuss auf einem Sensor;
Figur 6 ein zweites Beispiel einer zeitlichen Verteilung von Ultraschallimpulsen mit einem von allen Sensoren quasi-gleichzeitig ausgestrahlten Doppelschuss-Impuls und anschließendem Doppelschuss-Impulsen einzelner Sensoren;
Figur 7 eine mögliche Abfolge von jeweils zeitgleichem Senden kombiniert mit anschließendem zeitversetzten Senden einzelner Ultraschallimpulse mit zeitlich nacheinander variierter Pulsenergie für die rasche sequentielle Erfassung der Objekte dreier Teilbereiche;
Figur 8 eine andere mögliche Abfolge von zeitgleichen Sendens kombiniert mit anschließendem zeitversetzten Senden einzelner Ultraschallimpulsen jeweils zusätzlich zur bereits laufenden Überprüfung mit einer weiteren Impulsenergie für die rasche sequentielle Ersterfassung einzelner Teilbereiche in Kombination mit zeitparalleler zusätzlicher laufenden Überprüfung der Objekte in bereits erfassten Teilbereichen;
Figur 9 eine korrelierte Abfolge von Ultraschallimpulsen im Detail, wie sie beispielsweise ein Sensor Sal in der in Figur 8 dargestellten Abfolge ab ca. 135 ms aussenden könnte;
Figur 10 eine Abfolge von gleichzeitig ausgesandten Ultraschallimpulsen einer Energieart für die bevorzugte Objektbeobachtung in einem Teilbereich mit sequentiellen Ultraschallimpulsen einer anderen Energieart für die bevorzugte Objektbeobachtung in einem anderen Teilbereich.

In den Figuren der Zeichnung sind gleiche und funktionsgleiche Elemente und Merkmale - sofern nichts Anderes ausgeführt ist - mit denselben Bezugszeichen versehen.

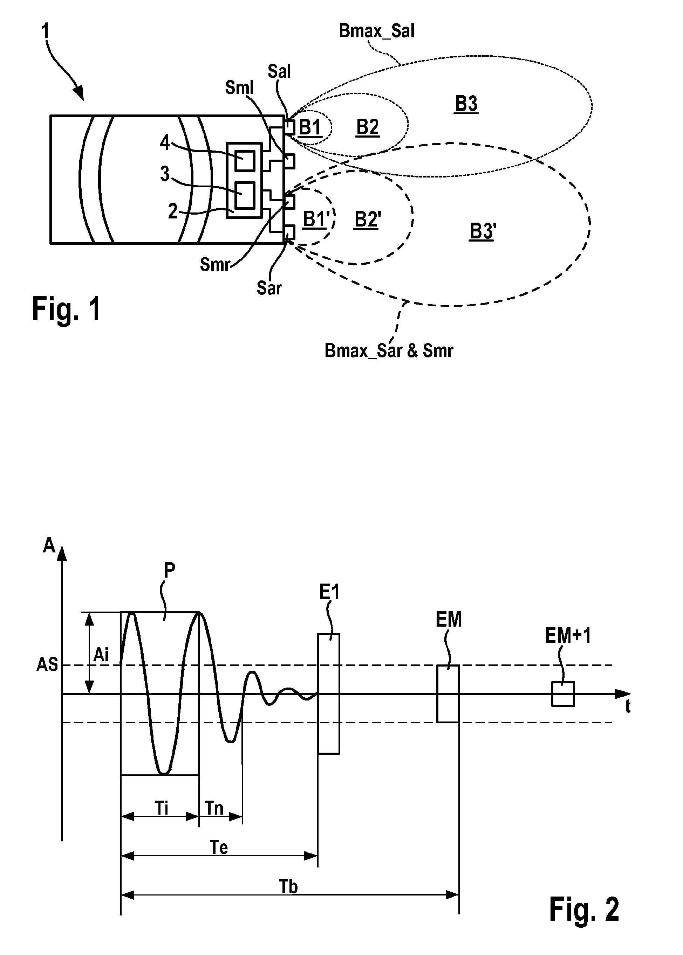

Fig. 1 zeigt eine Draufsicht auf ein symbolisch dargestelltes Fahrzeug 1, welches in diesem Beispiel an der Fahrzeugfront einen Ultraschallsensor außen links Sal, einen Ultraschallsensor mitte links Sml, einen Ultraschallsensor mitte rechts Smr und einen Ultraschallsensor außen rechts Sar aufweist. Die Sensoren Sal..Sar sind an eine zentrale Verarbeitungseinheit 2 angeschlossen, welche eine zentrale Recheneinheit 3 und einen Speicher 4 umfasst. Die zentrale Verarbeitungseinheit 2 bildet gemeinsam mit den Sensoren Sal..Sar das Ultraschallerfassungssystem. Im Speicher 4 sind eine Programm sowie die zu seiner Ausführung nötigen Daten abgelegt. Die zentrale Recheneinheit 3 liest dieses Programm aus dem Speicher 4 aus und arbeitet das Programm ab. Dabei werden Signale von den Sensoren Sal..Sar entsprechend verarbeitet und bewertet. Im gezeigten Beispiel sind die Sensoren Sal..Sar über Drahtleitungen mit der zentralen Verarbeitungseinheit 2 angeschlossen, denkbar ist aber auch eine Anbindung über Funk. Im gezeigten Beispiel ist die zentrale Verarbeitungseinheit 2 weiterhin als abgesetzte Einheit ausgeführt. Denkbar ist aber auch, dass die Funktion der zentralen Verarbeitungseinheit 2 in einen Bordcomputer integriert ist. Der Speicher 4 bildet dann einen Teil des Speichers des Bordcomputers. Die Verarbeitungseinheit 2 ist beispielsweise in einer der zuvor genannten Art unmittelbar oder mittelbar mit zumindest einer Vorrichtung verbunden, die geeignet ist den Fahrzeugfahrer zu informieren, wie beispielsweise einer Anzeige oder einem Lautsprecher, und/oder die geeignet ist, den Fahrer beim Fahren beispielsweise mittels Ansteuerung der Lenkung und/oder der Bremse und/oder der Beschleunigung (umgangssprachlich des Gas) zu unterstützen und/oder die geeignet ist mittels Parametrierung und/oder mittels Auslösen von Mitteln zur Senkung und/oder Vermeidung von Unfallfolgen, wie Airbags, Gurtstraffer, Fensterheber aufstellbare Motorhauben usw., beizutragen.

Die Sensoren Sal..Sar sind jeweils in der Lage, Objekte in einem keulenartigen, maximalen Erfassungsbereich vor dem Fahrzeug 1 zu detektieren. Exemplarisch ist in Fig. 1 der maximale Erfassungsbereich Bmax_Sal des Sensors Sal gepunktet und der maximale Erfassungsbereich Bmax_Sar&Smr des Sensorpaares Smr und Sar gestichelt dargestellt. Diese Erfassungsbereiche sind in den folgenden Ausführungen in einen ersten Teilbereich oder Kontaktbereich B1 beziehungsweise B1', einen zweiten Teilbereich oder Nahbereich B2 beziehungsweise B2' und in einen dritten Teilbereich oder Fernbereich B3 beziehungsweise B3' aufgeteilt. Im gezeigten Beispiel grenzen die Teilbereiche B1..B3 und B1'..B3' unmittelbar aneinander, denkbar sind aber auch überlappende Teilbereiche B1..B3, B1'..B3' beziehungsweise auch Lücken zwischen den Teilbereichen B1..B3, B1'..B3'. Denkbar ist schließlich auch, dass die Teilbereiche B1..B3, B1'..B3' nicht die maximalen Erfassungsbereiche Bmax_Sal und Bmax_Sar&Smr abdecken, sondern das Ultraschallobjekterfassungssystem etwas unter seiner Leistungsgrenze betrieben wird. Schließlich ist auch einer andere Anzahl an Teilbereichen B1..B3, B1'..B3' denkbar.

In den nachfolgenden Ausführungen wird davon ausgegangen, dass die Ultraschallsensoren Sal, Sml, Smr und Sar sowohl ein Ultraschallsignal aussenden als auch ein Echo empfangen können. Diese Bauart ist zwar vorteilhaft aber keineswegs zwingend. Gleichermaßen sind auch baulich getrennte Ultraschallsender und -Empfänger möglich. Selbstverständlich sind auch Ultraschallsensoren an der Rückseite des Fahrzeuges oder an dessen Seite möglich. Je nach Fahrsituation können diese Sensoren aktiviert oder deaktiviert werden.

Fig. 2 zeigt ein beispielhaftes Zeitdiagramm eines Ultraschallechozyklus, wobei auf der Abszisse die Zeit t und auf der Ordinate die Stärke A aufgetragen ist. Der ausgesendete Ultraschallimpuls P hat die Impulsdauer Ti und die Impulsstärke Ai. Die Fläche des aufgespannten Rechtecks entspricht damit der Impulsenergie. Nach dem Ende des Impulses P kommt die Membran nicht sofort zur Ruhe sondern schwingt noch etwas nach, bevor mit Hilfe der gleichen Membran Echosignale aufgenommen werden können, da Echosignale um Größenordnungen kleiner als die Sendepulse sind. Diese Zeit wird als Nachschwingdauer Tn bezeichnet. Der Abstand eines Objektes im Beobachtungsbereich wird anhand der Echolaufzeit Te erkannt, wenn die Echostärke E1 über einer Empfindlichkeitsschwelle AS und die Echopulsdauer in einem zeitlichen Erwartungsbereich liegen. Neben diesem ersten Echo E1 können aber durch Mehrfachreflexionen und/oder weiteren Objekten auch weitere Echos empfangen werden. Im gezeigten Beispiel kann ein Sensor Sal..Sar gerade noch das Echo EM empfangen, das nachfolgende Echo EM+1 und folgende aber nicht mehr, da sie unter der Empfindlichkeitsschwelle AS liegen. Infolge der Raumdämpfung nimmt die Wahrscheinlichkeit, dass nach dem Aussenden eines Sendeimpulses P Echoimpulse E1..EM empfangen werden können, deren Echostärke über der Empfindlichkeitsschwelle AS liegen, nämlich ab. Die Zeit zwischen Impulsbeginn und dem Echo EM, das gerade noch empfangen werden kann, wird als Echoberuhigungszeit Tb bezeichnet. Es ist zu beachten, dass die Echos E1..EM+1 rein symbolisch dargestellt sind. Die dargestellte Echodauer, Echostärke und das Intervall zwischen den Echos stimmen also nicht zwangsläufig mit einer realen Fallkonstellation überein.

Der zeitliche Signalverlauf an Sensoren Sal..Sar, bei denen der Wandler sowohl als Sender als auch als Empfänger arbeitet, gliedert sich also zumindest in die drei Zonen Sendeimpulsaussendung, Nachschwingen und Echoempfang. Bei Sensoren Sal..Sar mit getrenntem Echoschallwandler gilt diese Einteilung des zeitlichen Signalverlaufs sinngemäß für den Schallraum vor dem Sensor Sal..Sar. Insbesondere bei Wandlern, die als Sender und gleichzeitig auch als Empfänger genutzt werden, ist kein Echoempfang während des Nachschwingens möglich. Infolge des Nachschwingens können daher nur solche Echos E1..EM empfangen werden, deren Laufzeit Te mindestens so groß wie die Summe von Sendeimpulsdauer Ti und Nachschwingdauer Tn ist. Dieser Effekt wird auch als "Nachschwingtaubheit" bezeichnet. Diese hängt vorrangig von der Impulsstärke Ai und in geringerem Maß von der Impulsdauer Ti ab, wenn der sendende Wandler vor Ende der Impulsaussendung in einem stationären Schwingungszustand gelangt war. Wird der Ultraschallimpuls über eine andere Sensormembran ausgesandt, als über die Membran, mittels derer Echos empfangen werden, so begrenzt die durch die endliche Schallgeschwindigkeit erforderliche Signallaufzeit zwischen sendender und empfangender Membran die minimale Reichweite dieses Messaufbaus.

Der zeitliche Abstand zwischen zwei Sendeimpulsen P sollte mindestens so groß wie die Echoberuhigungszeit Tb sein, wenn ein vieldeutiger Echoempfang vermieden werden soll. In der Praxis hängt die Echoberuhigungszeit Tb von der Empfängerdynamik und der maximal möglichen Sendeimpulsstärke Ai ab, wobei unter Dynamik eines Empfängers das Verhältnis von maximal durch den Empfänger detektierbarer zu minimal detektierbarer Echoimpulsstärke verstanden wird. Systeme mit Empfängern, die mittels hoher Empfangsdynamik in der Lage sind, Echovieldeutigkeiten durch Analyse der empfangen Echostärke zu trennen, benötigen im Gegenzug zu Systemen ohne eine solche Empfängertechnik eine geringere Echoberuhigungszeit Tb. Derzeitige Übertragungssysteme reagieren nur auf den Beginn eines Empfangsechos und werten nicht die Impulsdauer beim Echoempfang aus.

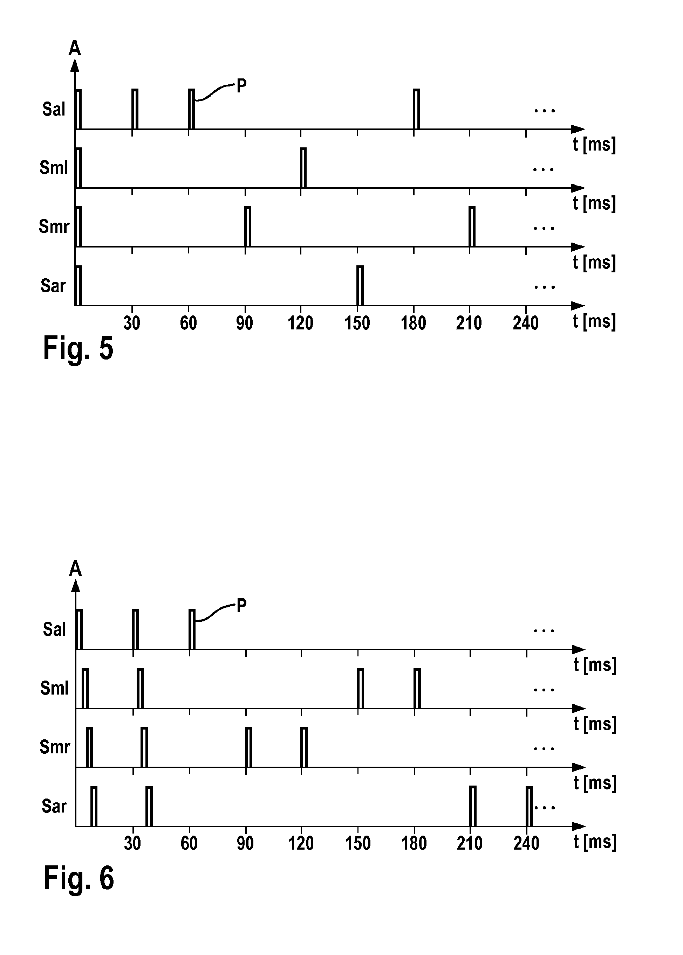

Zur Vermeidung von Echovieldeutigkeiten wird vorteilhaft nach jedem Senden die Echoberuhigungszeit Tb abgewartet, bevor ein weiterer Sendeimpuls P ausgesendet wird. Wird ein signifikantes Echo E1..EM empfangen, so wiederholt der Sensor Sal..Sar, der zuletzt einen Impuls P ausgesendet hat, bei einigen heute üblichen Systemen seine Impulsaussendung unmittelbar nach Ende der Echoberuhigungszeit Tb (siehe Figur 5 und 6) damit verifiziert werden kann, ob es sich bei dem zuerst empfangenen Echoimpuls E1..EM um einen Störimpuls eines Fremdsystems oder um ein Objektecho des eigenen Systems handelt. Diese verifizierende Sendewiederholung wird auch als einfacher "Doppelschuss" bezeichnet.

Ein weiterer Parameter eines Ultraschallobjekterfassungssystems ist die Ersterfassungszeit, das heißt die Zeit, die notwendig ist, um alle möglichen Echos eines stationären Objektszenarios empfangen zu können. Die Ersterfassungszeit heute gebräuchlicher Systeme, die nur Pulse mit einer festen Energie verwenden, entspricht dabei im Wesentlichen dem Produkt aus der Anzahl der sendenden Sensoren Sal..Sar und der jeweiligen Echoberuhigungszeit Tb. Die Ersterfassungszeit verdoppelt sich, wenn jeder Sendeimpuls P mindestens ein signifikantes Echo E1..EM und damit jeweils einen Doppelschuss ausgelöst hat. Die Ersterfassungszeit soll auch für komplexe Szenarien mit Objekten im Fern- und im Nahbereich sehr kurz sein, um selbst bei hoher Relativgeschwindigkeit der Objekte eine rasche und zuverlässige Objektdetektion zu ermöglichen. Diese Anforderungen soll mit dem hier beschriebenen erfindungsgemäßen Verfahren und System dadurch erfüllt werden, dass bei geeignetem Sendetiming die Sendesignalleistung des Systems erhöht wird, um Objekte im Fernfeld zu detektieren oder indem durch Absenken der Sendesignalleistung eine optimale Objektdetektion im Kontaktbereich ermöglicht wird.

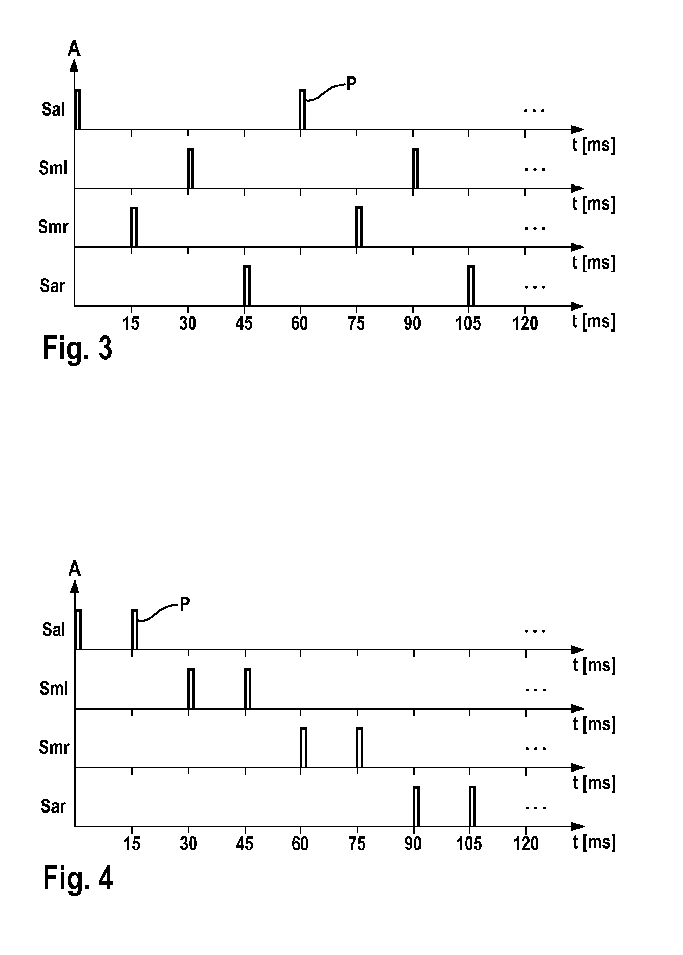

Fig. 3 zeigt nun wie bei heute üblichen Systemen die Ultraschallimpulse P der Sensoren Sal..Sar zeitlich verteilt sein können. In diesem Beispiel senden die einzelnen Sensoren Sal..Sar zeitversetzte Ultraschallimpulse P, zwischen denen jeweils eine Zeitspanne liegt, die größer ist als die Echoberuhigungszeit Tb. Im gezeigten Beispiel wird angenommen, dass die Echoberuhigungszeit Tb kleiner als 15 ms ist und die Ultraschallimpulse P daher im Abstand von 15 ms gesendet werden. An dieser Stelle wird angemerkt, dass die Zeitangaben für dieses und alle folgenden Beispiele als rein exemplarisch anzusehen sind. Die Erfindung ist keinesfalls an absolute zeitliche Größen gebunden. Vielmehr ist auch ein Abweichen von den dargestellten Zeiten möglich.

Zum Zeitpunkt t=0 sendet der äußerer linke Sensor Sal, zum Zeitpunkt t= 15 ms der mittlere rechte Sensor Smr, zum Zeitpunkt t= 30 ms der mittlere linke Sensor Sml und zum Zeitpunkt t= 45 ms der äußere rechte Sensor Sar einen Ultraschallimpuls P aus. Nach weiteren 15 ms wird diese Abfolge wiederholt. Echos E1..EM sind in dieser Figur der besseren Darstellbarkeit halber nicht eingezeichnet.

Fig. 4 zeigt eine Variation der in Fig. 3 gezeigten Abfolge von Ultraschallimpulsen P einiger heute bereits üblicher Systeme. Hier werden jeweils von einem Sensor Sal..Sar zwei aufeinander folgende Ultraschallimpulse P ausgesendet, wenn in dem jeweils vorangegangenen Echozyklus bedeutende Echos anhand der Echostärken mittels Empfindlichkeitsschwelle erkannt wurden. Dieses Verfahren wird auch als "klassischer Doppelschuss" bezeichnet und dient dazu, Echos E1..EM, welche auf den ersten Ultraschallimpuls P folgen, zu verifizieren. Folgt beim zweiten Ultraschallimpuls P dasselbe Echo E1..EM, so kann von einer eindeutigen Detektion eines Objekts ausgegangen werden. Folgt ein anderes Echo E1..EM, so ist eines der beiden Echos E1..EM aller Wahrscheinlichkeit nach auf eine Störung zurückzuführen. Im gezeigten Beispiel sendet der äußerer linke Sensor Sal zu den Zeitpunkten t=0 und t= 15 ms, der mittlere linke Sensor Sal zu den Zeitpunkten t=30 ms und t= 45 ms, der mittlere rechte Sensor Smr zu den Zeitpunkten t=60 ms und t= 75 ms und der äußerer rechte Sensor Sar zu den Zeitpunkten t=90 ms und t=105 ms. Nach 120 ms beginnt die Abfolge von neuem.

Fig. 5 zeigt ein erstes Beispiel einer erfindungsgemäßen Abfolge von Ultraschallimpulsen P. Hier senden die Sensoren Sal..Sar zu Beginn einer Überwachung (etwa nach der Inbetriebnahme) einen gleichzeitigen Ultraschallimpuls P aus. Es folgt - da hier die Echoberuhigungszeit Tb kleiner als 30 ms ist - ein weiterer Ultraschallimpuls P des äußeren linken Sensors Sal bei t=30ms. Danach folgt das bereits zu Fig. 3 beschriebene Verfahren, bloß mit Zeitabständen von t=30 ms anstelle von t=15 ms.

Fig. 6 zeigt ein zweites Beispiel einer Abfolge von Ultrastallimpulsen P, die nicht gleichzeitig, sondern quasi-gleichzeitig gesendet werden. "Quasi-gleichzeitig" bedeutet, dass die Impulse innerhalb der 10-fachen Sendepulsdauer Ti eines Einzelimpulses P gesendet werden. Die Impulsdauer Ti beträgt im Beispiel Ti=1 ms. Infolgedessen sendet der äußerer linke Sensor Sal zum Zeitpunkt t=0, der mittlere linke Sensor Sal zum Zeitpunkt t=1 ms, der mittlere rechte Sensor Smr zum Zeitpunkt t=2 ms und der äußerer rechte Sensor Sar zum Zeitpunkt t=3 ms. Nach 30 ms folgt ein weiterer quasi-gleichzeitiger Ultraschallimpuls P aller Sensoren Sal..Sar, der auch als "(quasi-) zeitgleicher Doppelschuss" bezeichnet wird. Anschließend folgt eine Ansteuerung, wie sie bisher üblich ist, d.h., Sml sendet nur einen Puls P, weil in seinem Echozyklus kein signifikantes Echo empfangen wurde und Smr sendet einen "klassischen Doppelschuss" aufgrund eines bedeutenden Echos innerhalb seines ersten Echozyklus. An dieser Stelle wird angemerkt, dass die Impulse P in der Figur der besseren Darstellbarkeit halber breiter gezeichnet sind als sie in der Realität sind. Der Maßstab dieser und der anderen Figuren entspricht daher nicht zwangsläufig realen Verhältnissen.

Zur Verifikation der empfangenen Echos E1..EM sollte bevorzugt nach einem zeitgleichen oder quasizeitgleichen Aussenden eines Ultraschallimpulses P jeder Sender nacheinander einen Einzelimpuls P senden, wobei der Zeitversatz zwischen den einzelnen Aussendungen in der Größenordnung der Echoberuhigungszeit Tb liegen sollte um Echovieldeutigkeiten zu vermeiden. Bevorzugt sollte bei diesem zeitversetzten Aussenden mit dem Aussenden an dem Sensor Sal..Sar begonnen werden, der in dem vorangegangenen Echobild mit größter Wahrscheinlichkeit die Ursache für das Empfangsecho mit der kürzesten Echolaufzeit war (Fig. 6, Sal). Eventuell findet auch ein klassischer Doppelschuss auf eines oder mehrerer Sensoren Sal..Sar statt wie bei den Sensoren Smr, Sml und Sar in Fig. 6 dargestellt ist.

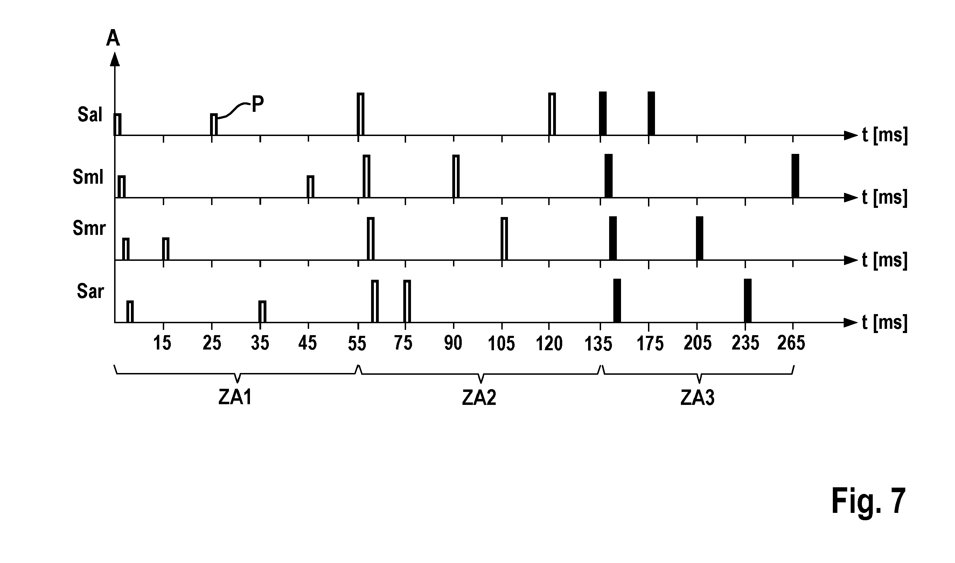

Fig. 7 zeigt nun eine mögliche Abfolge von Ultraschallimpulsen P für die Erfassung dreier Teilbereiche B1..B3, B1'..B3', wobei angenommen wird, dass der erste Teilbereich B1 beziehungsweise B1' den Bereich von 0 bis 50 cm, der zweite Teilbereich B2 beziehungsweise B2' den Bereich von 20 bis 150 cm und der dritte Teilbereich B3 beziehungsweise B3' den Bereich von mehr als 100 cm vor dem Fahrzeug 1 umspannt. Die ersten und zweiten Teilbereiche B1, B2, B1 und B2' werden daher etwa beim Einparken oder im Stillstand zum Tragen kommen, wohingegen die zweiten und dritten Teilbereiche B2, B3, B2' und B3' während der Fahrt des Kraftfahrzeuges zur Anwendung kommen wird. Diese Zuordnung ist rein willkürlich gewählt und dient bloß der Illustration des Beispiels. Andere Zuordnungen sind möglich. Auch eine geschwindigkeitsabhängige Einstellung der Teilbereiche B1..B3, B1'..B3' ist selbstverständlich möglich.

Anmerkung: Die Bezugszeichen B1..B3, Bl'..B3'für die Teilbereiche der Sensoren Sal beziehungsweise Sar und Smr kennzeichnen die von den Sensoren Sal beziehungsweise Sar und Smr abgetasteten Bereiche. Dort, wo die Sensoren Sal..Sar im folgenden einen quasi-gleichzeitigen Ultraschallimpuls P aussenden, wird ein von allen Sensoren Sal..Sar abgedeckter, nicht dargestellter, Teilbereich abgetastet, auch wenn die zugeordneten Bezugszeichen nur einen Teilbereich für die Sensoren Sal beziehungsweise Sar und Smr kennzeichnen. Diese Regelung ist analog auch für andere Fälle anzuwenden, bei denen ein Sensor Sal..Sar oder eine Kombination derselben aktiviert wird, welche(r) nicht durch die Bezugszeichen für die Teilbereiche B1..B3, B1'..B3' für die Sensoren Sal beziehungsweise Sar und Smr gekennzeichnet ist.

Die Abfolge wird im ersten Teilbereich B1, B1'mit einem quasi-gleichzeitigen Ultraschallimpuls P aller Sensoren Sal..Sar gestartet. Nach dem Aussenden des quasi-gleichzeitigen Ultraschallimpulses P werden innerhalb der Echoberuhigungszeit Tb alle Echos E1..EM empfangen ohne dass es eine weitere Aussendung eines Ultraschallimpulses P gibt. Während des Echoempfangs werden die Echos E1..EM analysiert. Dabei werden unter anderem solche Echos E1..EM, die die Folge von direktem Übersprechen zwischen einem Sender und benachbarten Empfängern sind, unterdrückt.

Nach jeweils etwa 10 ms - die Echoberuhigungszeit Tb ist im 1. Zeitabschnitt ZA1 von 0-55 ms zur bevorzugten Beobachtung im Teilbereich B1 kleiner als 10 ms - folgt zeitlich nacheinander ein Ultraschallimpuls P des mittleren rechten Sensors Smr, des äußeren linken Sensors Sal, des äußeren rechten Sensors Sar und des mittleren linken Sensors Sml jeweils unter Berücksichtigung der Echoberuhigungszeit Tb. Die Abfolge beginnt bevorzugt mit dem quasizeitgleichen Senden, um in einer kurzen Ersterfassungszeit ein grobes Bild darüber zu bekommen, an welchen Stellen im Raum sich kritische Objekte befinden und wie sie sich bewegen. Zur genauen Analyse des Objektszenarios sendet das System anschließend ab dem Zeitpunkt 15 ms einen Impuls P nur von einem Sensor Sal..Sar, um Detektionsvieldeutigkeiten, wie sie beim zeitgleichen Senden von mehreren aus unvermeidbar sind, ausschließen zu können. Die konkrete Sensorposition Smr für das Aussenden des ersten Einzelimpulses P wählt das System beispielsweise, weil generell der Mittelbereich vor dem Fahrzeug 1 mit einer höheren Priorität beobachtet werden soll, als der Seitenbereich. Alternativ kann natürlich auch das Aussenden auf den Seitensensoren wie beispielsweise Sal und/oder Sar mit hoher Priorität, d.h. beispielsweise zeitgleich und unmittelbar nach dem zeitgleichen Senden aller Sensoren Sal..Sar erfolgen. Alternativ hat das System nach dem zeitgleichen Senden auf Smr den ersten Einzelimpuls P aufgrund bestimmter Merkmale der Objektszene gesendet. In einen 2. Zeitabschnitt ZA2 wird beispielsweise bevorzugt abhängig von der Objektszene oder nach einer fest eingestellten Zeit oder anhand einer Kombination beider Kriterien gewechselt.

Die Abfolge im 2. Zeitabschnitt ZA2 von 55-135 ms zur bevorzugten Beobachtung im Teilbereich B2 wird vergleichbar wie im 1. Zeitabschnitt ZA1 mit einem quasi-gleichzeitigen Ultraschallimpuls P aller Sensoren Sal..Sar gestartet, dessen Impulsenergie sich gegenüber den Impulsen P aus dem vorangegangenen Zeitabschnitt ZA1 unterscheidet. Bevorzugt nimmt die Impulsenergie mit größerem Abstandsbereich zu. Nach jeweils beispielsweise 15 ms - die Echoberuhigungszeit Tb ist im Teilbereich B2 kleiner als 15 ms - folgt ein Ultraschallimpuls P des äußeren rechten Sensors Sar, des mittleren linken Sensors Sml, des mittleren rechten Sensors Smr und des äußeren linken Sensors Sal (geänderten Zeitmaßstab beachten!). In einen 3. Zeitabschnitt ZA3 wird ebenfalls beispielsweise bevorzugt abhängig von der Objektszene oder nach einer fest eingestellten Zeit oder anhand einer Kombination beider Kriterien gewechselt.

Die Abfolge im 3. Zeitabschnitt ZA3 von 135-265 ms zur bevorzugten Beobachtung im Teilbereich B3, B3' wird mit einem quasi-gleichzeitigen Ultraschallimpuls P aller Sensoren Sal..Sar gestartet, dessen Impulsenergie sich gegenüber den Impulsen P aus den vorangegangenen Zeitabschnitten ZA1 und ZA2 unterscheidet. Die Impulse P sind in diesem Beispiel zwar gleich stark wie für den zweiten Teilbereich B2, B2', jedoch dreimal so lange (Anmerkung: In der Figur sind die Ultraschallimpulse P für den dritten Teilbereich B3, B3' aber gleich lange dargestellt). Der quasi-gleichzeitige Ultraschallimpuls P dauert daher etwas länger als für die ersten und zweiten Teilbereiche B1, B2, B1' und B2'. Nach jeweils 30 ms - die Echoberuhigungszeit Tb ist im Teilbereich B3, B3' kleiner als 30 ms - folgt ein Ultraschallimpuls P des äußeren linken Sensors Sal, des mittleren rechten Sensors Smr, des äußeren rechten Sensors Sar und des mittleren linken Sensors Sml (geänderten Zeitmaßstab beachten!).

Die in der Fig. 7 gezeigte Variation der Impulsenergie ist als rein beispielhaft zu sehen. Selbstverständlich ist jede beliebige Kombination von Impulsdauer Ti und Impulsstärke Ai möglich, wobei sich die Impulsenergie zu unterscheidenden Impulse eines Systems bevorzugt deutlich, d.h. um mehr als den Faktor 2 unterscheiden. Auch die Annahme der Echoberuhigungszeit Tb für die Teilbereiche B1..B3, B1'..B3' ist rein willkürlich und daher als rein exemplarisch zu betrachten.

Das Grundprinzip des hier beschriebenen Signaltimings basiert darauf, dass mittels Pulsdauermodulation die Sendepulsenergie dadurch verändert wird, dass bei maximaler Signalstärke Ai die Impulsdauer Ti so variiert wird, dass das Signal-Rausch-Verhältnis eines Empfangsimpulses ausreichend groß ist. Durch eine lange Impulsdauer verringert sich die Signalbandbreite, was eine schmalbandige, das Rauschen unterdrückende Filterung, gestattet. Des Weiteren kann unabhängig von der Echostärke anhand der unterschiedlichen Pulsbreite auf eventuell unterschiedliche Echolaufzeiten der zu unterschiedlichen Sendezeitpunkten ausgesandten Impulse P mit unterschiedlicher Impulsdauer geschlussfolgert werden. Ein weiterer Vorteil des erfindungsgemäßen, deutlichen Veränderns der Dauer eines Sendepulses gegenüber der Verwendung einer Sequenz gleichlanger bzw. nahezu gleichlanger Impulse ist zumindest für den Direktechoempfang die nur einmalig auftretende Nachschwingtaubheit.

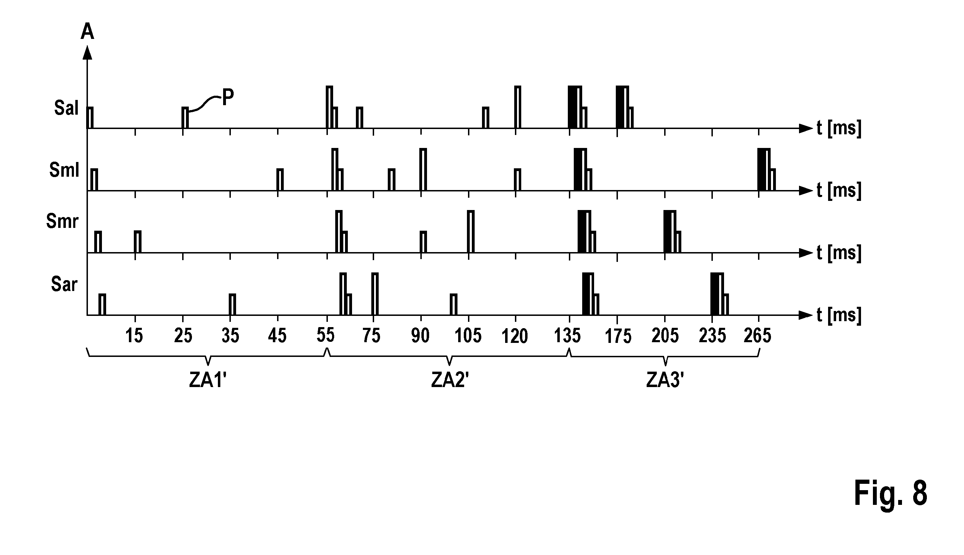

Fig. 8 zeigt eine Variation der in Fig. 7 dargestellten Abfolge von Ultraschallimpulsen P, die jeweils eine Kombination von zeitgleichem Senden mit anschließendem zeitversetzten Senden einzelner Impulse P sind. Hier werden jedoch in den nachfolgenden Zeitabschnitten ZA1'..ZA3' jeweils zusätzlich zu den bereits laufenden Überprüfungen mittels Ultraschallimpulsen P mit bereits in den vorangegangenen Zeitabschnitten ZA1'..ZA3' verwendeten Impulsenergien Abfolgen mit weiteren Impulsenergien genutzt. Durch die nahezu zeitgleiche Nutzung von Impulsen P verschiedener Impulsenergien innerhalb eines Zeitabschnittes ZA1'..ZA3' kann ein Zeitabschnitt ZA1'..ZA3' nicht mehr einem speziellen bevorzugten zu beobachtenden Teilbereich B1..B3, B1'..B3' zugeordnet werden. So ist im 2. Zeitabschnitt ZA2' (55-135 ms) in Fig. 8 beispielhaft das Aussenden von bereits im 1. Zeitabschnitt ZA1' (0-55 ms) verwendeten Impulsen P mit reduzierter Stärke kombiniert mit dem Aussenden anderer Impulse P mit höherer Stärke und/oder Impulsdauern dargestellt. In einer bevorzugten Ausprägung unterscheiden sich der Zeitverlauf des Sendens und die Reihenfolge der im ersten und auch im 2. Zeitabschnitt ZA1' und ZA2' ausgesendeten Impulse P mit ein und der gleichen Impulsenergie erheblich, besonders zwischen aufeinander folgenden Zeitabschnitten ZA1'..ZA3' als auch im Verhältnis zu den Impulsen P mit einer anderen Impulsenergie um durch eine möglichst hohe Diversität Detektionsfehler zu vermeiden. Dies wird beispielsweise dadurch die enge zeitliche Nachbarschaft der Impulse P verschiedener Energien während des quasi zeitgleichen Aussendens von mehreren Sensoren Sal..Sar im 2. Zeitabschnitt ZA2' gepaart mit einer geringen zeitlichen Korrelation der Abfolge des Sendens einzelner Impulse P der gleichen Impulsenergie zwischen dem ersten und dem 2. Zeitabschnitt ZA2' als auch zwischen den Impulsen P unterschiedlicher Impulsenergie innerhalb des 2. Zeitabschnitts ZA2' erreicht.

Im 3. Zeitabschnitt ZA3' (135-265 ms) werden zusätzlich zu der bereits laufenden Überprüfung mit Impulsen P zur bevorzugten Analyse in den Teilbereichen B1, B2, B1' und B2' Ultraschallimpulsen P für die bevorzugte Analyse in dem dritten Teilbereich B3, B3' ausgestrahlt. Im Gegensatz zu der oben genannten Variation erfolgt die Aussendung der Ultraschallimpulse P verschiedener Impulsenergien in diesem Zeitabschnitt ZA3' stets als relativ eng korreliertes Impulsbündel, das heißt die Impulse P unterschiedlicher Impulsenergien eines Senders Sal..Sar folgen aufeinander. Durch diese Art der Impulsbündelung unterscheidet sich der Zeitverlauf des Sendens und die Reihenfolge des 3. Zeitabschnittes ZA3' wiederum erheblich von den beiden vorangegangen Zeitabschnitten ZA1' und ZA2'.

An dieser Stelle wird darauf hingewiesen, dass die Zeitabschnitte ZA1..ZA3, ZA1'..ZA3' in den Figuren 7 und 8 auch deutlich länger dauern können. Beispielsweise kann die Abfolge von Ultraschallimpulsen P eines Zeitabschnitts ZA1..ZA3, ZA1'..ZA3' oder ein Teil davon öfter wiederholt werden. Natürlich können die Ultraschallimpulse P auch in anderer Abfolge ausgestrahlt werden. Die dargestellte Abfolge von Ultraschallimpulsen P ist daher lediglich als eines von vielen möglichen Beispielen zu sehen.

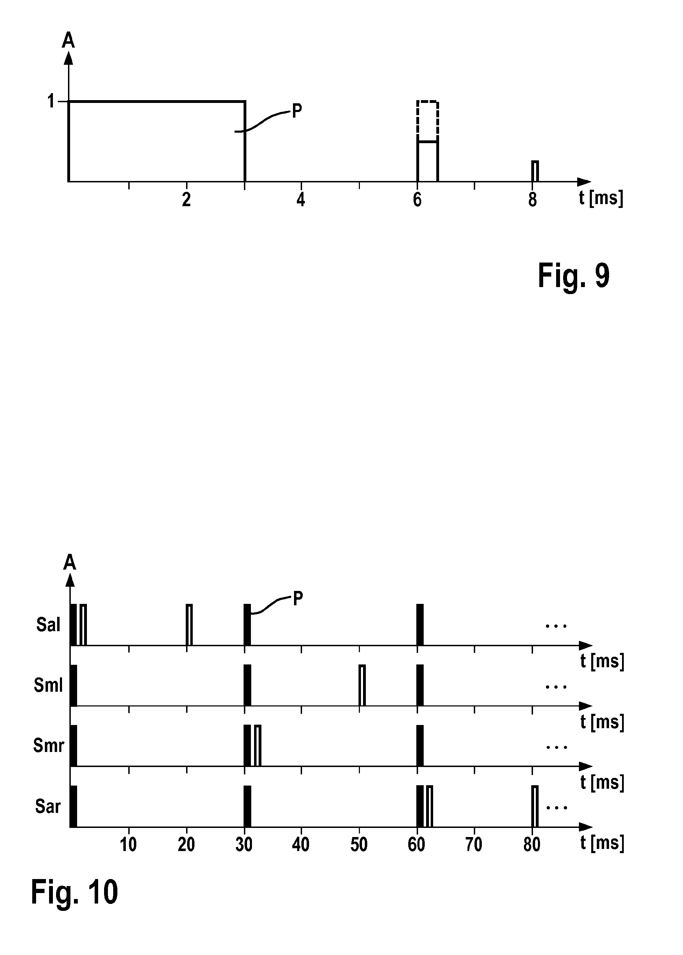

Fig. 9 zeigt beispielhaft die korrelierte Abfolge eines solchen Impulsbündels von Ultraschallimpulsen P im Detail. Zum Zeitpunkt t=0 wird ein Ultraschallimpuls P für die bevorzugte Objektdetektion im dritten Teilbereich B3, B3' ausgesendet. Dieser Impuls hat einer Impulsdauer Ti=3 ms und die normalisierte Impulsstärke Ai=1. Im gezeigten Beispiel deckt der dritte Teilbereich B3, B3' den Bereich von über 100 cm vor dem Fahrzeug 1 ab. Nach einer Karenzzeit, welche beispielsweise zirka der Impulsdauer entspricht, also nach weiteren 3 ms, wird ein Ultraschallimpuls P vom gleichen Sender Sal..Sar für den zweiten Teilbereich B2, B2' ausgesendet. Dieser Impuls hat eine Impulsdauer von Ti=0,3 ms und in diesem Beispiel eine normalisierte Impulsstärke von Ai=0,5. Optional könnte, wie gestrichelt in Fig. 9 dargestellt ist, die Impulsstärke jedoch auch gleich dem vorangegangen Impuls sein. Im gezeigten Beispiel deckt der zweite Teilbereich B2, 82' den Bereich von 20 bis 150 cm vor dem Fahrzeug 1 ab. Nach einer Karenzzeit, welche in diesem Beispiel der zirka der 6-fachen Impulsdauer Ti entspricht, also nach 1,7 ms, wird ein Ultraschallimpuls P für den dritten Teilbereich B3, B3' ausgesendet. Dieser Impuls hat eine Impulsdauer von Ti=0,1 ms und einer normalisierte Impulsstärke von Ai=0,25. Im gezeigten Beispiel deckt der erste Teilbereich B1, B1' den Bereich von 5 bis 50 cm vor dem Fahrzeug 1 ab. Die Karenzzeiten zwischen den einzelnen Impulsen P einer korrelierten Abfolge sollten bei Sendewiederholung zeitlich variiert werden, um systematische Blindheit bei der Objektdetektion zu vermeiden.

Fig. 10 zeigt ein letztes Beispiel einer Abfolge von Ultraschallimpulsen P. Hier senden alle Sensoren Sal..Sar gleichzeitig und im Abstand von 30 ms einen Ultraschallimpuls P für den dritten Teilbereich B3, B3' aus. Dazu unkorreliert werden Ultraschallimpulse P für den zweiten Teilbereich B2, B2' ausgesendet. Der äußere linke Sensor sendet einen Ultraschallimpuls P kurz nach dem ersten Ultraschallimpuls für den dritten Teilbereich B3, B3' bevorzugt nach einer im vorgenannten Abschnitt bezeichneten zeitvarianten Karenzzeit sowie bei t=20 ms. Der mittlere linke Sensor sendet einen Ultraschallimpuls P bei t=50 ms. Der mittlere rechte Sensor Smr sendet einen Ultraschallimpuls P kurz nach dem zweiten Ultraschallimpuls für den dritten Teilbereich B3, B3', wiederum bevorzugt nach einer im vorgenannten Abschnitt bezeichneten zeitvarianten Karenzzeit. Der äußere rechte Sensor Sar sendet schließlich einen Ultraschallimpuls P kurz nach dem dritten Ultraschallimpuls für den dritten Teilbereich B3, B3' sowie bei t=80 ms. Der dritte Teilbereich B3, B3' wird also mit Impulsfronten, die sich gleichzeitig von der Fahrzeugkontur ablösen, überwacht, während der zweite Teilbereich B2, B2' mit Einzelimpulsen P überwacht wird, welche eine exaktere Bestimmung der im zweiten Teilbereich B2, B2' vorhandenen Objekte erlaubt.

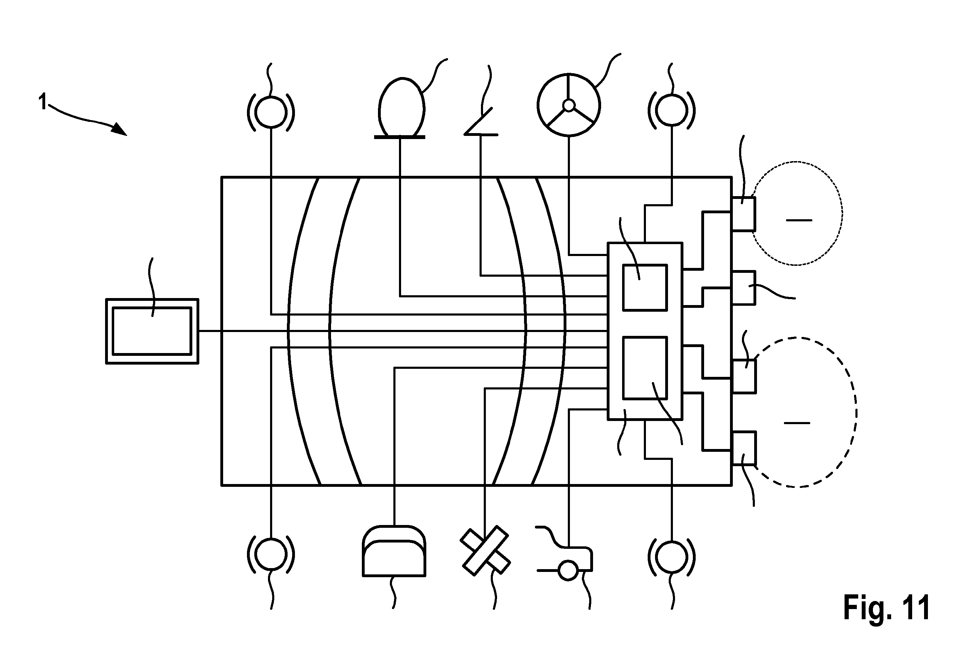

Fig. 11 zeigt schließlich ein Fahrzeug 1, enthaltend ein Ausgabegerät 12 zur optischen und/oder akustischen Ausgabe von Informationen über die räumliche Anordnung und optional der Bewegung der das Fahrzeug 1 umgebenden Objekte und/oder eine Vorrichtung um beim Lenken bzw. manövrieren des Fahrzeuges 1 durch Ansteuerung der Lenkvorrichtungen 6 behilflich zu sein und/oder ein Gerät um das Fahrzeug 1 durch Betätigung der Bremsvorrichtung 5a..5d oder der Beschleunigungsvorrichtung, wie z.B. dem Gas 7, in seiner Fahrweise zu beeinflussen und/oder Schnittstellen zu Vorrichtungen zur Vermeidung von Unfällen und/oder zur Senkung der Unfallschwere, wie z.B. Airbags 8, Gurtstraffer 10, Fensterheber 11, Dachantriebe und/oder höhenverstellbaren Motorhauben 9, um sie in ihren Eigenschaften zu beeinflussen, wie z.B. zu parametrieren, und/oder zu betätigen.

Bevorzugt verwendet dieses Fahrzeug 1 bei der Inbetriebnahme nach einer längeren Betriebspause das in Fig. 8 dargestellte Sendetiming in der dort dargestellten festen zeitlichen Reihenfolge, d.h., zuerst wird das im 1. Zeitabschnitt ZA1' dargestellte Sendtiming, dann das im 2. und dann das im 3. Zeitabschnitt ZA2' und ZA3' dargestellten Sendetiming gesendet, so dass bei Beschränkung auf die exemplarisch dargestellten 4 bidirektionalen Sensoren Sal..Sar bereits nach einer Ersterfassungszeit von ca. 295 ms ein vollständiges Bild über die Objekte in den durch die 4 Sensoren Sal..Sar beobachteten Bereichen Bmax der Sensoren Sal..Sar und Sensorpaarungen vorliegt.

Anschließend sollte bevorzugt solange das im 3. Zeitabschnitt ZA3' des Fig. 8, bzw. Fig. 9 dargestellte Sendetimingprinzip verwendet werden, bis ein Objekt insbesondere infolge rascher Annäherung oder/und bei geringem Abstand besonders hohe Beobachtungsaufmerksamkeit erfordert, was durch Wechsel auf eines der Sendetimings in Zeitabschnitt 2 bzw. 1 ZA2, ZA2', ZA1 und ZA1' in Fig. 8 bzw. der in Fig. 7 dargestellten Verfahren erreicht wird. Alternativ zum Zeitabschnitt 3 und 2 ZA3' und ZA2' in Fig. 8 kann man auch das Sendeschema Fig. 10 - z.B. zeitlich einander abwechselnd Schemata - verwenden. Nur im Fall sehr kritischer Situationen, wie dem raschen Annähern eines bedeutenden Objektes wie einer Person und/oder eines Fahrzeuges in geringem Abstand sollte dabei jedoch vollständig auf die Beobachtung der Objekte im Fernfeld durch Weglassen der Sendezeitschemata im 3. Zeitabschnitt ZA3 und ZA3' der Fig. 7 und Fig. 8, und des Fig. 10 verzichtet werden. In allen anderen Fällen sollte - wenn auch mit geringerer Wiederholrate - mit energiereichen Sendepulsen weiterhin das Fernfeld beobachtet werden um z.B. im Rahmen einer Massenkarambolage neben den bereits detektierten Objekten in der näheren Umgebung das Herannahen weiterer Objekte im Fernfeld rasch zu erkennen und in geeigneter Weise, beispielsweise durch Wechsel der Beobachtungsaufmerksamkeit auf ein sich aus der Ferne rasch annäherndes Objekt reagieren zu können.

Äquivalent zu dem oben genannten Beispiel wird durch besonders häufiges Verwenden des 3. Zeitabschnitts ZA3 aus Fig. 7 der Beobachtungsschwerpunkt auf das Fernfeld gelenkt, wobei - wenn auch mit geringerer Häufigkeit - durch Verwendung von zumindest dem Zeitschema aus Fig. 10 und/oder dem 3. Zeitschema von Fig. 8 oder/und einem anderen Zeitschema, Sendepulse geringer Pulsenergie enthaltend, zusätzlich die Fahrzeugumgebung in mittlerer Reichweite und/oder die nähere Umgebung weiterhin beobachte werden.

Die Verwendung der einzelnen Sendezeitschemata erfolgt auf diese Weise abhängig von der jeweils vorliegenden Objektszene.

Sind mehr als 4 Sensoren Sal..Sar so angebracht, dass ihre Beobachtungsbereiche sich überlappen, so sind die zusätzlichen Echozyklen der Sensoren in den einzelnen Schemata zu berücksichtigen, wodurch sich die vorgenannten Zeitabschnitte ZA1..ZA3, ZA1'..ZA3' entsprechend verlängern. Dennoch erreicht man durch die Kombination verschiedener Pulsenergien in einem Sendeschema eine bisher nicht erreichte Beobachtungsreichweite Bmax bei geringer Erstbeobachtungszeit Tb.

Abschließend wird darauf hingewiesen, dass die Ultraschallimpulse P auch "grenzüberschreitende" Echos E1..EM verursachen. Beispielsweise verursacht ein Ultraschallimpuls P für den dritten Teilbereich B3 auch Echos E1..EM in den ersten und zweiten Teilbereichen B1, B2, B1 und B2'. Diese Echos E1..EM können natürlich auch ausgewertet werden, wenngleich die Impulsenergie dann nicht optimal auf den betreffenden Teilbereich B1, B2, B1 und B2' abgestimmt ist.

## Patentansprüche

1. Verfahren zur Erfassung von Objekten mit Hilfe zumindest eines Sensors (Sal..Sar) eines Ultraschallobjekterfassungssystems, umfassend die Schritte:
a) Aussenden zumindest eines Ultraschallimpulses (P) mit einer durch Impulsdauer (Ti) und Impulsstärke (Ai) definierten Impulsenergie;
b) Empfangen zumindest eines Echos (E1..EM) des zumindest einen Ultraschallimpulses (P);
c) Verarbeiten des zumindest einen Echos (E1..EM) und Überprüfen ob kritische Objekte in einem Teilbereich (B1..B3, B1'..B3') innerhalb des vom zumindest einen Sensor (Sal..Sar) maximal erfassbaren Bereichs (Bmax_Sal, Bmax_Sar&Smr) vorhanden sind; und
d) Wiederholen der Schritte a) bis d) mit dieser Impulsenergie und/oder Wiederholen der Schritte a) bis d) mit einer anderen Impulsenergie, abhängig vom Ergebnis der Prüfung in Schritt c).

2. Verfahren nach Anspruch 1, **dadurch gekennzeichnet, dass** die Schritte a) bis d) mit einer höheren Impulsenergie zur Überprüfung eines entfernteren Teilbereichs (B1..B3, B1'..B3') und/oder mit einer geringeren Impulsenergie, zur Überprüfung eines näher liegenden Teilbereichs (B1..B3, B1'..B3') wiederholt werden.

3. Verfahren nach Anspruch 1 oder 2, **dadurch gekennzeichnet, dass** die Impulsenergie durch Variation der Impulsdauer (Ti) variiert wird und sich die Impulsdauern (Ti) in zwei verschiedenen Teilbereichen (B1..B3, B1'..B3') um mindestens den Faktor 2 unterscheiden.

4. Verfahren nach einem der Ansprüche 1 bis 3, **dadurch gekennzeichnet, dass** die Impulsenergie durch Variation der Impulsstärke (Ai) variiert wird und sich die Impulsstärke (Ai) in zwei verschiedenen Teilbereichen (B1..B3, B1'..B3') um mindestens den Faktor 2 unterscheiden.

5. Verfahren nach einem der Ansprüche 1 bis 4, **dadurch gekennzeichnet, dass** gleichzeitig zu einer Abfolge erster Ultraschallimpulse (P), welche eine erste Impulsenergie zur Überprüfung eines ersten Teilbereichs (B1, B1') aufweisen, eine Abfolge zweiter Ultraschallimpulse (P), welche eine zweite Impulsenergie zur Überprüfung eines zweiten Teilbereichs (B2, B2') aufweisen, ausgesendet wird.

6. Verfahren nach Anspruch 5, **dadurch gekennzeichnet, dass** für die Überwachung von zumindest zwei Teilbereichen (B1..B3, B1'..B3') unterschiedliche Abfolgen von Ultraschallimpulsen (P) vorgesehen sind.

7. Verfahren nach einem der Ansprüche 1 bis 5, **dadurch gekennzeichnet, dass** nach einem ersten Ultraschallimpuls (P), welcher eine erste Impulsenergie zur Überprüfung eines ersten Teilbereichs (B1, B1') aufweist, aber innerhalb einer Echoberuhigungszeit (Tb) im ersten Teilbereich (B1, B1') ein zweiter Ultraschallimpuls (P) mit einer zweiten Impulsenergie (Ai) zur Überprüfung eines zweiten Teilbereichs (B2, B2') ausgesendet wird.

8. Verfahren nach einem der Ansprüche 1 bis 7, **dadurch gekennzeichnet, dass** Ultraschallimpulse (P) von mehreren Punkten gleichzeitig ausgestrahlt werden.

9. Verfahren nach Anspruch 8, **dadurch gekennzeichnet, dass** nach einer Echoberuhigungszeit (Tb) nach den besagten Ultraschallimpulsen (P) weitere Ultraschallimpulse (P) von mehreren Punkten gleichzeitig ausgestrahlt werden.

10. Verfahren nach Anspruch 8, **dadurch gekennzeichnet, dass** nach einer Echoberuhigungszeit (Tb) nach den besagten Ultraschallimpulsen (P) ein weiterer Ultraschallimpuls (P) von einem einzigen Punkt ausgestrahlt wird.

11. Verfahren nach Anspruch 8, **dadurch gekennzeichnet, dass** nach den besagten Ultraschallimpulsen (P), welche eine erste Impulsenergie zur Überprüfung eines ersten Teilbereichs (B1, B1') aufweisen, von den mehreren Punkten Ultraschallimpulse (P) mit einer zweiten Impulsenergie zur Überprüfung eines zweiten Teilbereichs (B2, B2') sequentiell, jeweils nach einer Echoberuhigungszeit (Tb) für den zweiten Teilbereich (B2, B2'), ausgesendet werden.

12. Verfahren nach einem der Ansprüche 8 bis 11, **dadurch gekennzeichnet, dass** anstelle der gleichzeitigen Ausstrahlung eine sequentielle Ausstrahlung von Ultraschallimpulsen (P) von den mehreren Punkten innerhalb der zehnfachen Dauer eines Ultraschallimpulses (Ti) vorgesehen ist.

13. Ultraschallobjekterfassungssystem, umfassend:
- zumindest einen Sensor (Sal..Sar) zum Aussenden eines Ultraschallimpulses (P) mit einer durch Impulsdauer (Ti) und Impulsstärke (Ai) definierten Impulsenergie und zum Empfangen eines Echos (E1..EM) des Ultraschallimpulses (P);
- eine zentrale Verarbeitungseinheit (2) zum Verarbeiten des Echos (E1..EM) und Überprüfen ob kritische Objekte in einem Teilbereich (B1..B3, B1'..B3') innerhalb des vom zumindest einen Sensor (Sal..Sar) maximal erfassbaren Bereichs (Bmax_Sal, Bmax_Sar&Smr) vorhanden sind und
zum Wiederholen des Aussendens eines Ultraschallimpulses (P) mit dieser Impulsenergie und/oder zum Aussenden eines Ultraschallimpulses (P) mit einer anderen Impulsenergie abhängig vom Ergebnis der Überprüfung..
